# EUROPÄISCHE PATENTSCHRIFT

(11) **EP 0 673 712 B1**
(45) Veröffentlichungstag und Bekanntmachung des Hinweises auf die Patenterteilung: **09.04.1997**
(21) Anmeldenummer: 95100444.9
(22) Anmeldetag: 13.01.1995
(51) Int. Cl.: B23Q 11/08

(54) **Schutzabdeckung für den Arbeitsbereich einer Werkzeugmaschine**
Protective cover for the operating range of a tool machine
Capot de protection pour la zone de travail d'une machine-outil

(30) Priorität: 18.02.1994 DE 4405247
(43) Veröffentlichungstag der Anmeldung: 27.09.1995
(73) Patentinhaber: DECKEL MAHO GmbH, D-87459 Pfronten (DE)
(72) Erfinder: Geissler, Alfred, Dipl.-Ing., D-87459 Pfronten (DE)
(74) Vertreter: Beetz & Partner Patentanwälte

(56) Entgegenhaltungen:
- EP-A- 0 407 599
- DE-A- 3 620 765
- DE-A- 3 713 058
- DE-C- 954 304
- DE-C- 957 709
- FR-A- 922 630
- GB-A- 1 209 854
- US-A- 3 366 012
- US-A- 5 263 800

## Beschreibung

Die Erfindung betrifft eine Schutzabdeckung für den Arbeitsbereich einer Werkzeugmaschine, bestehend aus einer Vielzahl von Segmenten, die über Verbindungselemente beweglich miteinander verbunden und gegeneinander verschiebbar sind.

Bei modernen Werkzeugmaschinen und Bearbeitungszentren insbesondere zur spanenden Bearbeitung von Werkstücken ist der Arbeitsraum häufig gegen die rückwärtig angeordneten Maschinenteile durch eine Trennwand abgedeckt, um die rückwärtigen Teile vor Verschmutzungen durch Kühlflüssigkeit, Späne oder andere Materialien zu schützen. Die Trennwände sind meist als Schürzen oder Jalousien ausgebildet, um ihre Schutzfunktion auch bei den unterschiedlichen Relativlagen und -bewegungen zwischen Werkstück und Arbeitswerkzeug erfüllen zu können. Da die bisher verwendeten Jalousien nur einen Freiheitsgrad haben, d.h. sich nur in einer Achse zusammenschieben und auseinanderziehen lassen, müssen jeweils mehrere gesonderte Jalousiesegmente in zueinander rechtwinkliger Ausrichtung verwendet werden, um den gesamten Arbeitsbereich der jeweiligen Werkzeugmaschine in allen Positionen der Werkzeugspindel und des Werkstücktisches abzudecken. Diese Vielzahl von gesonderten Jalousiesegmenten erhöht den konstruktiven Aufwand. Ferner bestehen Dichtungsprobleme an den Übergängen der einzelnen Jalousiesegmente gegenüber der Arbeits- bzw. KühlflüssigkeitAus der DE-C 954 304 ist eine Schutzabdeckung für Führungsbahnen in Werkzeugmaschinen bekannt, die aus teleskopartig ineinanderschiebbaren Kästen und als Scherenführung ausgebildeten Verbindungselementen besteht. Ein Ende der Scherenführung ist an einem stationären Maschinenteil und das andere Ende an dem beweglichen Maschinenteil befestigt, wobei auch alle Abdeckkästen an vorbestimmten Stellen dieser Scherenführung angelenkt sind.

In der DE-A-3 620 765 ist eine Abdeckung für Durchbrüche beliebiger Form beschrieben, die als Schutz gegen das Eindringen von Flüssigkeiten, Spänen und anderen Verunreinigungen in den eine Maschinenspindel umgebenden Raum eingesetzt werden kann. Die Abdeckung besteht aus mehreren lamellenartig ineinander verschiebbaren Segmenten. Jedes Abdecksegment besitzt einen Anschlag, nach dessen Erreichen sich die Verschiebung des einen Anschlagsegments auf das nächste überträgt.

Der Erfindung liegt die Aufgabe zugrunde, eine Schutzabdeckung zu schaffen, die auf konstruktiv einfache Art eine zuverlässige Abdeckung des gesamten Arbeitsbereichs in zwei Achsen gegen die rückwärtigen Maschinenteile gewährleistet.

Die Aufgabe wird erfindungsgemäß dadurch gelöst, daß die Segmente als Rahmen ausgebildet sind, die ineinander angeordnet sind, wobei der maximale Verschiebeweg des einzelnen Rahmens kleiner als die Stegbreite des nächst größeren Rahmens ist.

Die erfindungsgemäße Schutzabdeckung besteht aus mehreren ineinander relativ verschiebbar angeordneten Rahmen, von denen der äußerste Rahmen fest mit einem Bauteil der Werkzeugmaschine, beispielsweise mit dem horizontal verfahrbaren Maschinenständer, verbunden und der innerste an dem in mindestens einer Achse beweglichen Maschinenschlitten, beispielsweise am vertikal verfahrbaren Spindelgehäuse, formschlüssig festgelegt sein kann. Die Rahmen können vieleckig oder kreis- bzw. bogenförmig sein und sind durch besondere Verbindungselemente miteinander verbunden. Die inneren Rahmen sind in den jeweils äußeren Rahmen gleicher Form und größerer Abmessungen beweglich, wobei in konzentrischer Anordnung der jeweils innere Rahmen in den beiden Koordinatenachsen um etwa die Hälfte der Stegbreite nach innen vorsteht. Je zwei Rahmen sind durch mindestens zwei Verbindungselemente miteinander verbunden, welche begrenzte und aufeinander abgestimmte Bewegungen der Rahmen zulassen. Bei rechteckigen Rahmenformen sind die Verbindungselemente vorzugsweise als Scherengitter ausgebildet, um eine gleichförmige Verschiebung aller Rahmen zu gewährleisten.

Zweckmäßig ist das innerste Rahmensegment dicht an der verfahrbaren Werkzeugspindel angeordnet und wird von dieser in der Vertikalebene mitgenommen. Die maximale Auslenkung des innersten Rahmens im nächst äußeren Rahmen wird erreicht, wenn sein Außenrand gegen den Außenrand des äußeren Rahmens trifft. Durch die aufeinander abgestimmten Stegbreiten beider Rahmen wird auch in diesem Zustand eine gewisse Überlappung aufrechterhalten und damit eine Abdeckung zum Arbeitsbereich hin gewährleistet.

Zweckmäßig sollen sich alle Rahmen möglichst gleichmäßig bewegen und nicht erst jeder einzelne Rahmen gegenüber dem nächsten in die extreme Auslenkung gelangen. Dies läßt sich über die Ausbildung geeigneter Verbindungselemente erreichen.

Bei der bevorzugten Ausführung der Verbindungselemente in Form eines Scherengitters sind die sich kreuzende Streben an den Kreuzungspunkten mit den einzelnen Rahmen gelenkig verbunden, so daß eine Auslenkbewegung z. B. des innersten Rahmens durch das Scherengitter auf die anderen - äußeren - Rahmen gleichförmig übertragen wird.

Insbesondere bei runden oder ovalen Rahmenformen können als Verbindungselemente auch andere Bauteile verwendet werden, welche die einzelnen Rahmen in zwei Achsen bewegbar miteinander verbinden und eine Bewegungsübertragung von einem Rahmen zum anderen gewährleisten.

Zur Erzielung möglichst großer Auslenkbewegungen der einzelnen Rahmen und einer günstigen Anordnung der Verbindungselemente an der Rahmenrückseite haben die Rahmen einen vorzugsweise U-förmigen Querschnitt, dessen längerer Schenkel die Rahmenfrontseite bildet und an dessen kürzerem Schenkel die Verbindungselemente angelenkt sind. Die Länge des Mittelstegs des U-förmigen Querschnitts verändert sich von Rahmen zu Rahmen, so daß sich die Rahmen bei ihren Auslenkbewegungen ineinanderschieben. Der längere frontseitige Schenkel ist so gewählt, daß auch bei maximaler Auslenkung eines Rahmens eine dichte Überdeckung durch den frontseitigen Schenkel des benachbarten Rahmens erhalten bleibt.

Vorteilhaft sollte der äußerste Rahmen verstärkt ausgeführt sein und gleichzeitig ein Traggestell für die Schutzhaube der Werkzeugmaschine bilden, deren Gewicht und konstruktiver Aufwand auf diese Weise erheblich verringert werden kann.

Um eine effektive Abdichtung gegen Flüssigkeiten und Feststoffpartikeln zwischen den einzelnen Rahmen in allen Auslenkungslagen zu gewährleisten, sind zweckmäßig an den Rändern der frontseitigen Stegschenkel Dichtungsleisten aus z. B. Gummi od. dgl. angeordnet.

Weitere Vorzüge und Merkmale der Erfindung ergeben sich aus der folgenden Beschreibung bevorzugter Ausführungsbeispiele anhand der Zeichnung. Es zeigen:
- Fig. 1: die Frontseite der Schutzabdeckung in Neutralstellung;
- Fig. 2: die Rückseite der Schutzabdeckung nach Fig. 1 mit Verbindungselementen;
- Fig. 3: die Schutzabdeckung nach Fig. 1 in Seitenansicht;
- Fig. 3a: einen vergrößerten Ausschnitt der Schutzabdeckung nach Fig. 3;
- Fig. 4: die Frontseite der Schutzabdeckung in ausgelenkter Position;
- Fig. 5, 6: die Schutzabdeckung nach Fig. 4 in Seitenansicht bzw. in Rückansicht.

Die dargestellte Schutzabdeckung ist für eine Universal-Bohr- und Fräsmaschine konzipiert und soll die mechanisch empfindlichen rückwärtigen Maschinenteile, wie den Maschinenständer mit den Führungen, gegen Verschmutzung durch Späne und Arbeits- bzw. Kühlflüssigkeit schützen, und zwar ohne die Relativbewegungen zwischen dem aufgespannten Werkstück und der Arbeitsspindel zu beeinträchtigen. Zu diesem Zweck enthält die Schutzabdeckung ein hier rechteckiges Innensegment 1 mit einer Ausnehmung 2, die von der Arbeitsspindel 3 unter Zwischenschaltung einer geeigneten Dichtung durchragt wird oder an ihr bzw. an einem ihrer Bauteile dicht befestigt ist. Das Innensegment 1 ist von mehreren rechteckigen Rahmen 4 bis 7 umgeben, von denen der Außenrahmen 7 an einem Bauteil 8 der Werkzeugmaschine, z. B. an einem Maschinenständer oder an einem Maschinenbett, befestigt ist und die Rahmen 4 bis 6 gegeneinander in der Vertikalebene verschiebbar sind.

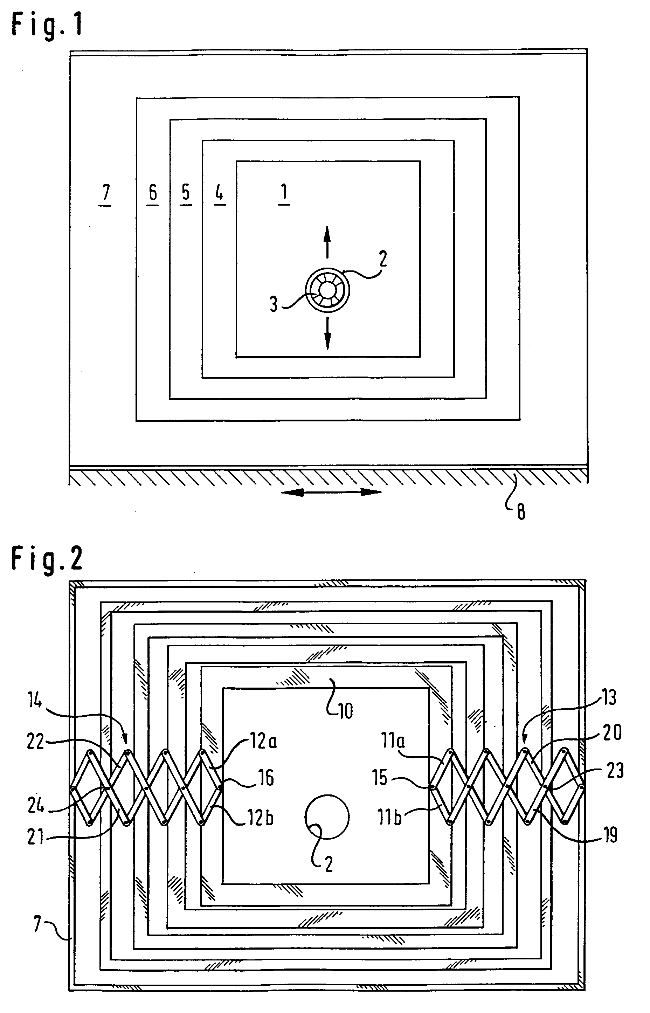

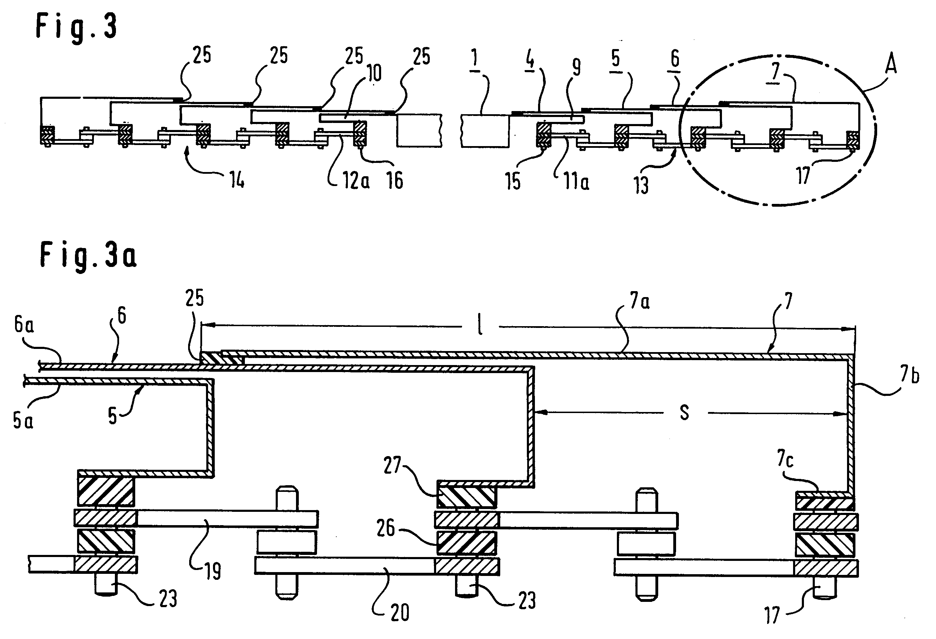

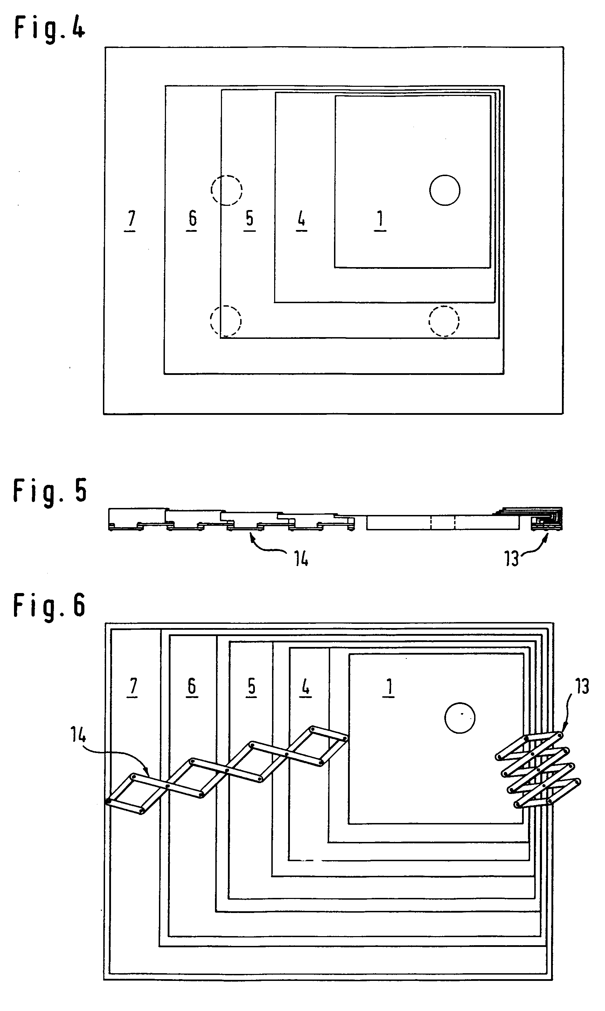

Wie aus Fig.2, 3 und 3a ersichtlich ist, weist das Innensegment 1 einen U-förmigen Rand 9 auf, an dessen rückwärtigem Schenkel 10 zwei Endstreben 11a, 11b bzw. 12a, 12b von zwei diametral gegenüberliegenden Scherengittern 13, 14 um je einen Zapfen 15, 16 verschwenkbar angelenkt sind. Das Innensegment 1 und die Rahmen 4 bis 7 sind in der in Fig. 2 bzw. 6 dargestellten Weise durch die als Verbindungselemente wirkenden Scherengitter 13, 14 relativverschiebbar miteinander verbunden. Die beiden äußeren Endstreben jedes Scherengitters 13, 14 sind um je einen Zapfen 17 gegensinnig verschwenkbar an dem rückwärtigen Schenkel 7c des Außenrahmens 7 angelenkt (vgl. Fig. 3, 3a). Die mittleren Rahmen 4 bis 6 sind durch gleichlange gekreuzte Streben 19 bis 22 der jeweiligen Scherengitter 13, 14 miteinander verbunden. In jedem Kreuzungspunkt der Streben 19 bis 22 befindet sich ein Drehzapfen 23, 24, der in dem jeweils rückwärtigen Schenkel der im Querschnitt U-förmigen Rahmen 4 bis 6 sitzt. Die Streben 19 bis 22 sind an ihren Enden gelenkig miteinander verbunden.

Wie insbesondere in den Fig. 3, 3a und 5 gezeigt, haben der U-förmige Rand 9 und die U-förmigen Rahmen 4 bis 7 eine von innen nach außen zunehmende Maulweite, d. h. eine zunehmende Länge des jeweiligen Mittelstegs, die so bemessen wird, daß sich das Innensegment 1 und die Rahmen 4 bis 7 bei einer Auslenkbewegung der Arbeitsspindel 3 ineinanderschieben können (s. Fig. 5). Die rückwärtigen Schenkel des Segmentrandes und der Rahmen haben eine von innen nach außen abnehmende Länge, durch die auch im voll eingeschobenen Zustand ein ausreichender Überstand erzielt und Kollisionen der Streben und Scharniere der Scherengitter 13, 14 vermieden werden.

Wie in der vergrößerten Schnittdarstellung der Fig. 3a gezeigt, hat der Außenrahmen 7 den kürzesten rückwärtigen Schenkel 7c, den längsten Mittelsteg 7b und einen frontseitigen Steg 7a, dessen Länge größer als der maximale Auslenkweg s des nächstinneren Rahmens 6 ist. Entsprechendes gilt bei dem dargestellten Ausführungsbeispiel für die frontseitigen Schenkel 6a, 5a der weiteren Rahmen 4, 5, 6. An der Endkante jedes frontseitigen Schenkels 4a - 6a ist je ein umlaufender Dichtungsstreifen 25 aus einem geeigneten Material mit oder ohne Dichtungslippen befestigt, der auf dem frontseitigen Schenkel des nächstinneren Rahmens in dichtendem Gleitkontakt aufliegt. Gemäß Fig. 3a können an den Lagern bzw. Gelenken 15, 16, 23 Gleitscheiben 26 und Abstandshalter 27 mit nach innen zunehmender Dicke vorgesehen sein.

Die vorstehend beschriebene Schutzabdeckung funktioniert wie folgt:

Bei einer Bewegung der Arbeitsspindel 3 aus der in Fig. 1 dargestellten Mittenstellung z. B. in die extreme Auslenkposition nach Fig. 4 wird das Innensegment 1 von der Arbeitsspindel 3 mitgenommen. Gleichzeitig erfolgt eine entsprechende Auslenkbewegung der inneren Rahmen 4 bis 6 aufgrund der durch die Scherengitter 13 und 14 vorgegebenen Kinematik. Da die Länge 1 der frontseitigen Schenkel der Rahmen 4 bis 7 geringfügig größer als der maximale Verschiebeweg s ist, bleibt auch in der maximalen Auslenkposition eine durchgehende Überdeckung aller frontseitigen Schenkel erhalten.

Die Erfindung ist nicht auf das dargestellte Ausführungsbeispiel beschränkt. So können statt der Scherengitter auch andere geeignete Verbindungselemente, wie z. B. Federn oder Gelenkhebelsysteme, verwendet werden, um die Bewegungen des Innensegments 1 und/oder des Außenrahmens 7 auf die anderen Bauteile der Schutzabdeckung zu übertragen. Ferner sind neben den U-förmigen Querschnitten des Segmentrandes und der Rahmen auch andere Formen möglich, die bei einer maximalen Auslenkbewegung einen ausreichenden Übergriff der frontseitigen Rahmenelemente gewährleisten. Schließlich können die Rahmenelemente neben der vieleckigen auch eine kreisrunde oder elliptische Form haben. Obgleich z. B. zur Verschleißminderung einer gleichzeitigen proportionalen Auslenkbewegung aller Rahmen der Vorzug gegeben wird, kann es bei besonderen Anwendungsfällen zweckmäßig sein, die einzelnen Rahmen nacheinander auszulenken. Ferner kann der Außenrahmen verstärkt ausgebildet sein und ein Traggestell für die Schutzhaube der Werkzeugmaschine bilden, wodurch auf die bisher notwendige Tragkonstruktion der Schutzhaube verzichtet werden kann. Ferner hat es sich als zweckmäßig erwiesen, die Scherengitter 13, 14 nicht in der in Fig. 2 dargestellten Weise horizontal auszurichten, sondern die Gelenkzapfen 15, 16 jeweils in den oberen Eckbereichen jedes Rahmens 1 bis 7 anzuordnen, so daß sich eine hängende Halterung der einzelnen Rahmen ergibt und eine größere Freiheit bei der konstruktiven Gestaltung der Verbindungselemente der Scherengitter ohne Kollisionsgefahr erreicht wird. Daneben sind auch andere Anordnungen von zwei und mehr Scherengittern möglich.

## Patentansprüche

1. Schutzabdeckung für den Arbeitsbereich einer Werkzeugmaschine, bestehend aus einer Vielzahl von Segmenten, die über Verbindungselemente beweglich miteinander verbunden sind, wobei die Segmente über die Verbindungselemente gegeneinander verschiebbar sind,
**dadurch gekennzeichnet,** daß
die Segmente als Rahmen (1, 4 bis 7) ausgebildet sind, die ineinander angeordnet sind, wobei der maximale Verschiebeweg (5) des einzelnen Rahmens kleiner als die Stegbreite (l) des nächst größeren Rahmens ist.

2. Schutzabdeckung nach Anspruch 1,
dadurch gekennzeichnet, daß
die Rahmen einen nach innen geöffneten U-förmigen Querschnitt haben, deren frontseitige Schenkel mit der jeweiligen Stegbreite (l) sich gegenseitig überdecken und an deren rückwärtigen Schenkeln die Verbindungselemente gelagert sind, wobei die Maulweite der U-förmigen Querschnitte des jeweils inneren Rahmen kleiner als die des jeweils nächst äußeren Rahmen ist.

3. Schutzabdeckung nach Anspruch 1 oder 2,
dadurch gekennzeichnet, daß
die Rahmen (4 bis 7) an ihren Rändern Dichtungsstreifen (25) aufweisen.

4. Schutzabdeckung nach einem der vorangehenden Ansprüche,
dadurch gekennzeichnet, daß
die Rahmen kreis- oder ellipsenförmig sind.

5. Schutzabdeckung nach einem der Ansprüche 1 bis 3,
dadurch gekennzeichnet, daß
die Rahmen vieleckig sind.

6. Schutzabdeckung nach Anspruch 4,
dadurch gekennzeichnet, daß
die Rahmen gewölbt sind.

7. Schutzabdeckung nach einem der vorangehenden Ansprüche,
dadurch gekennzeichnet, daß
das innerste Segment eine im wesentlichen durchgehende Platte ist, die eine Aussparung (2) zur Aufnahme der Arbeitsspindel (3) bzw. für Werkzeuge und einen U-förmigen Rand (9) aufweist.

8. Schutzabdeckung nach einem der Ansprüche 1 bis 7,
dadurch gekennzeichnet, daß
die Verbindungselemente als Scherengitter (13, 14) ausgebildet sind.

9. Schutzabdeckung nach Anspruch 8,
dadurch gekennzeichnet, daß
zwei Scherengitter (13, 14) zur hängenden Halterung der Rahmen (4 bis 7) und des Mittelsegments (1) vorgesehen sind, deren Gelenkzapfen (15, 16) jeweils in den oberen Eckbereichen der Rahmen (4 bis 7) und des Mittelsegments (1) angeordnet sind.

10. Schutzabdeckung nach einem der Ansprüche 1 bis 9,
dadurch gekennzeichnet, daß
der Außenrahmen (7) verstärkt ausgeführt ist und ein Traggestell für die Schutzhaube der Werkzeugmaschine bildet.

## Claims

1. A protective cover for the working range of a machine tool, comprising a plurality of segments which are movably connected to one another by way of connection elements, the segments being displaceable with respect to one another by way of the connection elements, characterized in that the segments are constructed as frames (1, 4 to 7) which are arranged one inside the other, the maximum displacement travel (5) of the individual frame being smaller than the bar width (l) of the next frame up in size.

2. A protective cover according to Claim 1, characterized in that the frames have an inwardly open U-shaped cross-section whereof the front limbs having the respective bar width (l) overlap one another, and on the rear limbs whereof the connection elements are borne, the opening width of the U-shaped cross-sections of the respectively inner frame being smaller than that of the respectively next frame outward.

3. A protective cover according to Claim 1 or 2, characterized in that the frames (4 to 7) have sealing strips (25) at their edges.

4. A protective cover according to one of the preceding claims, characterized in that the frames are circular or elliptical in shape.

5. A protective cover according to one of Claims 1 to 3, characterized in that the frames are polygonal.

6. A protective cover according to Claim 4, characterized in that the frames are convex.

7. A protective cover according to one of the preceding claims, characterized in that the innermost segment is a substantially continuous plate which has a cutout (2) for receiving the work spindle (3) or for tools, and has a U-shaped edge (9).

8. A protective cover according to one of Claims 1 to 7, characterized in that the connection elements are constructed as slidable lattice grates (13, 14).

9. A protective cover according to Claim 8, characterized in that two slidable lattice grates (13, 14) are provided for the suspended mounting of the frames (4 to 7) and the central segment (1), the link pins (15, 16) of these slidable lattice grates (13, 14) each being arranged in the upper corner regions of the frames (4 to 7) and of the central segment (1).

10. A protective cover according to one of Claims 1 to 9, characterized in that the outer frame (7) is of reinforced construction and forms a supporting structure for the protective hood of the machine tool.

## Revendications

1. Capot de protection pour la zone de travail d'une machine-outil, constitué d'une pluralité de segments, lesquels sont assemblés les uns aux autres de manière mobile par des éléments d'assemblage, lesdits segments ayant une aptitude de mouvement en va-et-vient les uns par rapport aux autres par l'intermédiaire desdits éléments d'assemblage, caractérisé en ce que les segments sont réalisés sous forme de cadres (1, 4 à 7) disposés les uns à l'intérieur des autres, le trajet de déplacement maximal (5) de chaque cadre étant inférieur à la largeur (l) du cadre plus grand qui lui fait suite.

2. Capot de protection selon la revendication 1, caractérisé en ce que les cadres présentent une section transversale en forme de U ouvert vers l'intérieur dont les branches du côté frontal se recouvrent mutuellement le long de la largeur (l) respective et sur les branches arrière desquelles sont montés les éléments d'assemblage, l'écartement entre les branches du U formé par la section transversale du cadre situé respectivement à l'intérieur étant plus petit que celui du cadre extérieur suivant.

3. Capot de protection selon la revendication 1 ou 2, caractérisé en ce que les cadres (4 à 7) présentent sur leurs bords des bandes d'étanchéité (25).

4. Capot de protection selon l'une des revendications précédentes, caractérisé en ce que les cadres présentent une forme circulaire ou ovale.

5. Capot de protection selon l'une des revendications 1 à 3, caractérisé en ce que les cadres sont polygonaux.

6. Capot de protection selon la revendication 4, caractérisé en ce que les cadres sont bombés.

7. Capot de protection selon l'une des revendications précédentes, caractérisé en ce que le segment le plus intérieur est une plaque sensiblement passante qui présente un évidement (2) pour la réception de la broche (3), destiné par exemple à des outils, ainsi qu'un bord (9) en forme de U.

8. Capot de protection selon l'une des revendications 1 à 7, caractérisé en ce que les éléments d'assemblage sont réalisés sous la forme de parallélogrammes articulés (13, 14).

9. Capot de protection selon la revendication 8, caractérisé en ce que deux ensembles de parallélogrammes articulés (13, 14) sont prévus pour assurer un support suspendu des cadres (4 à 7) et du segment central (1), leurs tourillons d'articulation (15, 16) étant disposés respectivement dans les zones angulaires supérieures des cadres 4 à 7 et du segment central 1.

10. Capot de protection selon l'une des revendications 1 à 9, caractérisé en ce que le cadre extérieur (7) est renforcé et constitue un bâti support pour la hotte de protection de la machine-outil.
